# EUROPEAN PATENT SPECIFICATION

(11) **EP 3 857 100 B1**
(45) Date of publication and mention of the grant of the patent: **02.04.2025**
(21) Application number: 19779812.7
(22) Date of filing: 25.09.2019
(51) Int. Cl.: F16L 23/02, F16L 23/18, F16J 15/06, F16J 15/10, F16J 15/12

(54) **GASKET WITH LONG TERM SEALING CAPACITY**
DICHTUNG MIT LANGZEITDICHTUNGSKAPAZITÄT
JOINT D'ÉTANCHÉITÉ À CAPACITÉ D'ÉTANCHÉITÉ À LONG TERME

(30) Priority: 26.09.2018 NL 1043013
(43) Date of publication of application: 04.08.2021
(73) Proprietor: Eriks NV, 2660 Antwerpen (BE)
(72) Inventor: GEERNAERT, Thomas, 9255 Buggenhout (BE); DE PAUW, Ben, 8450 Bredene (BE); BERGHMANS, Francis, 2260 Westerlo (BE); THIENPONT, Hugo, 1755 Gooik (BE); MOUTON, Jan, 1785 Merchtem (BE); PRONK, Dick, 1606NA Venhuizen (NL)
(74) Representative: Poindron, Cyrille
(86) International application number: PCT/EP2019/075867
(87) International publication number: WO 2020/064837

(56) References cited:
- EP-A2- 2 801 739
- EP-A2- 2 801 739
- CN-A- 104 806 761
- CN-A- 104 806 761
- CN-A- 106 352 084
- CN-A- 106 352 084
- GB-A- 2 536 962
- GB-A- 2 536 962
- US-A1- 2018 058 616
- US-A1- 2018 058 616

## Description

The present invention relates to gaskets used to seal tube assemblies, and in particular, the invention relates to gaskets intended to be placed between two tubes assembled together, for sealing the tube assembly over a long time period.

During such long time period, up to several years or decades, the tube assembly might be subjected to variations of temperature, to vibrations, mechanical stress variations, so that the tube joint might be subjected to variable clamping stress or force (also called seating force or seating stress), and leaks might occur if the seating force becomes too low or null.

Document US9664286B2 describes a gasket with a sealing portion which is compressible, but the disclosed gasket will leak if the seating force becomes too low or null during its service life.

Document EP2801739A2 discloses a gasket according to the preamble of claim 1.

The present invention aims to address the above mentioned drawbacks of the prior art, and to propose first a gasket having the capacity to help for avoidance of leaks, even if, during a long or very long service life, the seating force varies and decreases too much.

In this aim, a first aspect of the invention relates to a gasket for sealing an assembly of two tubes each comprising an extremity with a seating surface,
the gasket comprising a sealing portion with two opposite faces, each being arranged to contact a respective seating surface,
the sealing portion comprising at least a compressible portion,
wherein the gasket comprises an optical fiber comprising a sensing portion at least partially enclosed in the compressible portion and arranged to detect a compression force (or a compression strain) applied by the tube assembly to the compressible portion via the opposite faces.

The gasket according to the above embodiment comprises an optical fiber with a sensing portion enclosed in the compressible portion. Thus, the optical fiber provides the capacity to monitor or measure the seating stress (via a detected compression strain or compression stress, creating the compression force), so that in case of strong decrease of the compression force, an alarm can be sent so as to invite an operator to check / repair the clamping of the tubes. In other words, if the optical fiber with the sensing portion detects a too low seating force, the bolts/nuts maintaining the tube together can be changed, screwed again to the proper value/torque so as to avoid any leak. In addition, the sensing portion of the fiber is enclosed in the compressible portion, so that the risk of leakage due to the presence of the fiber is prevented.

According to the invention, the gasket comprises guiding means arranged to provide guiding of the optical fiber out of the sealing portion. The guiding means are part of the gasket, and not linked to the tubes. Therefore, the tubes and their flanges do not need to be modified to receive the gasket according to the invention, equipped with the optical fiber.

Advantageously, the guiding means are arranged to provide guiding of the optical fiber towards a space arranged between two planes defined by the two opposite faces. In the above embodiment, the optical fiber is guided out of the gasket and positioned between the seating surfaces of the tubes (typically flanges), so that the optical fiber is directly maintained by the gasket itself within a space where there is no interference with the tubes. In other words, the tubes are free of any connector for guiding the optical fiber.

Advantageously, the optical fiber comprises a connector arranged to be connected to a monitoring unit, so as to monitor the compression force generated by the assembly of the two tubes. Typically, the sensing portion is located at an extremity of the optical fiber, and the connector is located at the opposite extremity.

According to the invention, the compressible portion comprises a strip spirally wound, and the sensing portion is at least partially wound with the strip. In such embodiment, the optical fiber is wound with the strip, so as to minimize the process changes, and this takes advantage of the flexible / elastic properties of the optical fiber, to be included in the spiral part of the gasket.

Advantageously, the optical fiber is enclosed only in an outer portion of the strip spirally wound. Thus, the optical fiber and its sensing portion are remote from the inner portion of the compressible portion, the latter being usually exposed to the fluid to seal. Therefore, the sealing is not compromised by the optical fiber.

Advantageously, the sensing portion of the optical fiber is arranged between two adjacent portions of the strip.

Advantageously, a cross section of the strip comprises a portion in V shape or U-shape.

Advantageously, the sensing portion of the optical fiber arranged between two adjacent portions of the strip is located in a central part of the V shape. In other words, the sensing portion is located in the middle portion of the gasket, thus minimizing the impact onto the sealing capacity of the gasket.

Advantageously, the strip comprises a metallic layer and a filler layer, the filler layer comprising a material such as graphite, polytetrafluoroethylene, or mica, or rubber.

Advantageously, the sensing portion of the optical fiber is at least partially located within the filler layer.

Advantageously, the sensing portion of the optical fiber is at least partially surrounded with the material of the filler layer.

Advantageously, the compressible portion comprises a solid portion, made of an homogenous material at least partially enclosing the sensing portion of the optical fiber. In other words, the solid portion is made of a single material. According to an embodiment, the compressible portion is made only of one single solid portion.

Advantageously, the homogenous material comprises polytetrafluoroethylene (PTFE), or mica, or rubber.

Advantageously, the compressible portion comprises a composite portion comprising at least one fibrous material and at least partially enclosing the sensing portion of the optical fiber. In other words, the composite portion is made of a fibrous material and resin. According to an embodiment, the compressible portion is made only of one single composite portion, made of a fibrous material and resin.

Advantageously, the composite portion comprises aramid fibers and/or glass fibers, and/or carbon fibers.

Advantageously, the gasket comprises an inner ring, preferably made of metal.

Advantageously, the gasket comprises an outer ring, preferably made of metal.

Advantageously, the outer ring comprises a slot or a hole, and the optical fiber is at least partially arranged in the hole or groove. The outer ring holds the fiber from exterior to interior of the gasket, to minimize the risk of mechanical damage of the fiber. This embodiment provides a path for the fiber for being directed to the inner part of the gasket, without compromising the tightness.

Advantageously, the sensing portion of the optical fiber comprises one or more fiber Bragg grating sensors (FBGs). A FBG is a type of Bragg reflector constructed in a short segment of an optical fiber that reflects particular wavelengths of light and transmits all others, and that is sensitive to strain as well as to temperature changes. The sensor will also detect the temperature and if any medium (gas/liquid) will diffuse through the gasket, a second kind of alarm might be generated, based on temperature changes or values.

The first aspect of the invention is then the use, in a gasket for sealing a tube joint, of such optical fiber comprising a sensing portion with a fiber Bragg grating sensor.

A second aspect of the invention is directed to a tube assembly, comprising:
- at least two tubes each comprising an extremity with a seating surface, or one tube and one plate,
- a gasket according to the first aspect of the invention, arranged between the seating surfaces,
- clamping means, such as bolts, generating a clamping force maintaining the two tubes assembled, and the compression force applied onto the compressible portion.

In other words, the second aspect of the invention is directed to a tube assembly, comprising:
- a tube joint, made of two tubes, or made of one tube and one plate,
- a gasket according to the first aspect of the invention, arranged between the seating surfaces,
- clamping means, such as bolts, generating a clamping force maintaining the two tubes assembled, and the compression force applied onto the compressible portion.

A third aspect of the invention is related to a monitoring system, comprising:
- a tube assembly according to the second aspect,
- a monitoring unit, connected to the optical fiber of the gasket, for monitoring a compression force (or a compression strain) applied by the tube assembly to the compressible portion.

Advantageously:
- the sensing portion is a dedicated section of the optical fiber that is interrogated by a distributed optical fiber sensing technique,
- the monitoring unit is arranged to carry out a distributed optical fiber sensing technique such as optical time domain reflectometry, and/or phase optical time domain reflectometry, and/or optical frequency domain reflectometry, and/or Brillouin optical time domain reflectometry, and/or Raman optical time domain reflectometry. The invention is not limited to the above mentioned techniques, but they are well suited to measure and detect a given value or a change of strain / stress / temperature in a specific section of the optical fiber, in addition or as an alternative of the fiber Bragg grating sensor. Then, efficient monitoring of the seating stress can be achieved.

Other features and advantages of the present invention will appear more clearly from the following detailed description of particular non-limitative examples of the invention, illustrated by the appended drawings where:
- figure 1A represents a sketch of a tube assembly comprising a gasket according to the invention ;
- figure 1B represents the gasket of figure 1A ;
- figure 2 represents a detail of the gasket of figure 1B ;
- figure 3 represents a detail of the gasket of figure 1B during its manufacturing ;
- figure 4 represents a detail of an alternative gasket of figure 1B (not claimed);
- figure 5 represents a detail of another alternative construction of the gasket of figure 1B (not claimed);
- figures 6A - 6C represent examples of tube assemblies with a gasket of the present invention ;
- figure 7 represents the tube assembly of figure 1A, with a monitoring unit, to monitor a seating stress applied to the gasket ;
- figure 8 represents another alternative construction of the gasket of figure 1B (not claimed);
- figure 9 represents another alternative construction of the gasket of figure 8 (not claimed).

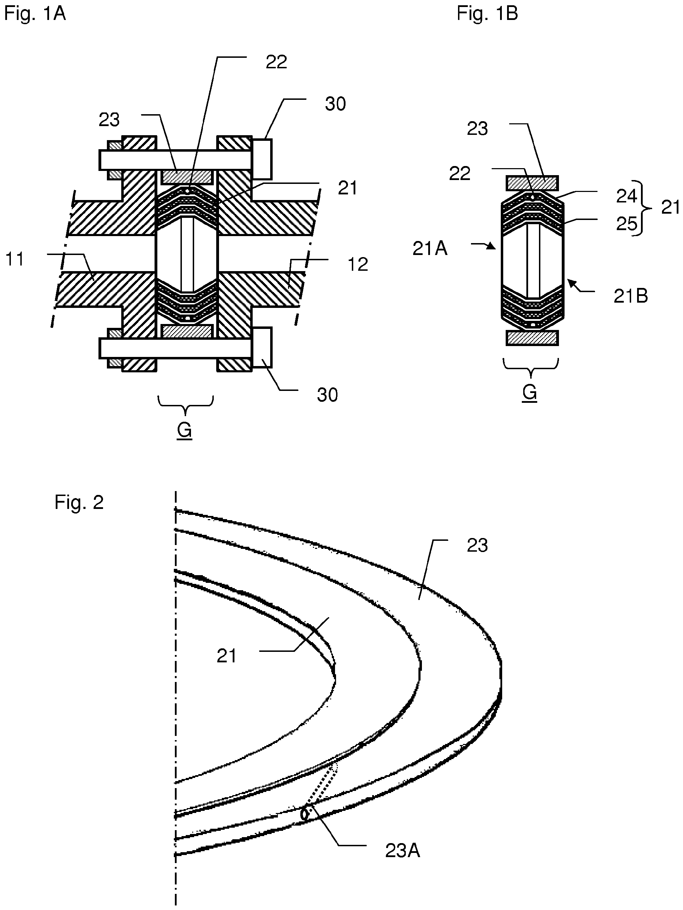

The figure 1A is a simplified sketch and represents an assembly of two tubes 11, 12, maintained together by nuts and bolts 30. The tubes 11, 12 are typically used to convey fluids, such as liquids, water, oil... and tightness at the tube joint is provided by a gasket G. Nuts and bolts 30 provide a seating stress which compresses the gasket G which in return seals the tube joint.

Typically, the gasket G comprises a sealing portion which is in contact with the tubes 11 and 12, via a seating surface of these tubes 11 and 12. The sealing portion is a compressible portion 21, also shown in figure 1B, and in this example, is made of a strip wound in spiral. This strip comprises a steel band 24, and a filler 25, typically made of graphite, polytetrafluoroethylene (ptfe) or mica. The strip and in particular the metallic band have a portion in V-shape or U-shape. It has to be noted that a W-shape is possible and can be considered as two portions in V-shape. In this example of construction of figure 1A and 1B, the gasket G comprises an outer ring 23, which is made of steel, or stainless steel.

As shown figure 1B, the sealing portion comprises two opposite faces 21A and 21B, each being in contact with one of the respective extremity of tubes 11 and 12, to seal the tube assembly. In other words, the gasket G is sandwiched between the two tubes 11 and 12 via its opposite faces 21a, 21B.

During service life, especially if the tube joint is subjected to temperature changes, and/or pressure changes, and/or vibrations, and/or mechanical stress, it might be that the seating stress applied by the tube assembly onto the gasket G will vary, and if the seating stress decreases too much, leaks could occur.

To prevent such risk, the invention provides a gasket G with seating stress measurement capacity. In this aim, an optical fiber 22 is implemented in the outer part of the compressible portion 21. To provide capacity to measure variations of the seating stress, the optical fiber 22 comprises a sensing portion which is enclosed into the compressible portion 21, and which comprises fiber Bragg grating sensors.

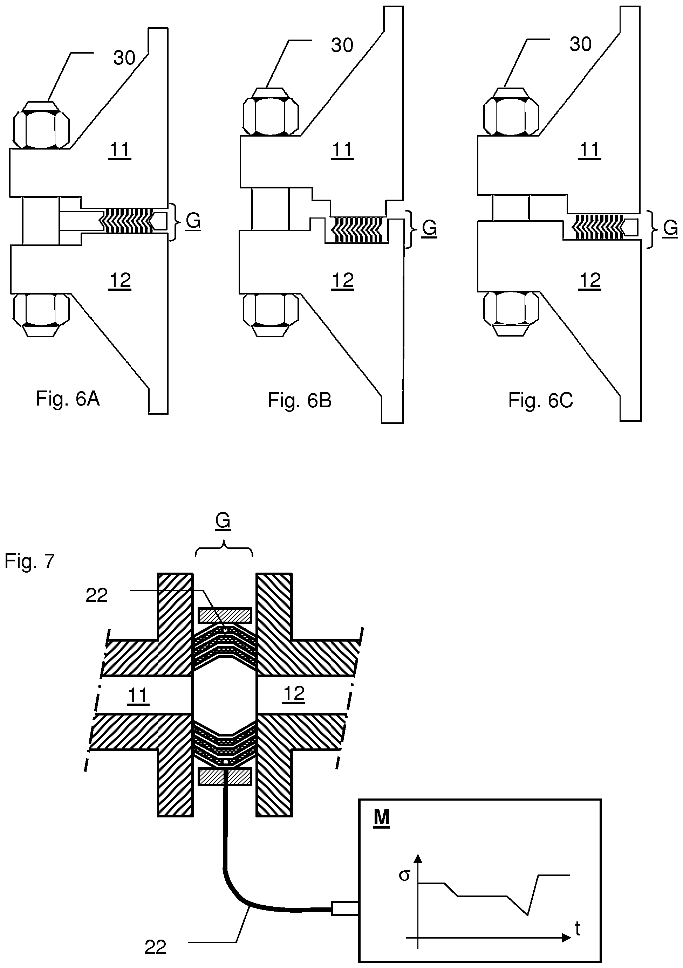

Such sensor is sensitive to strain, and when connected to a monitoring unit M as shown on figure 7 (this figure 7 does not show the nuts and bolts 30 for clarity), the optical fiber 22 provides the capacity to measure the seating stress (σ) applied to the compressible portion 21 of the gasket G along time (t). if the seating stress becomes too low, it is possible to send an alarm to an operator for inspection and possibly adjusting the seating stress by screwing or exchanging the nuts and bolts 30, so as to avoid the risk of leak, in advance. Also the sensor will detect the temperature and if any medium (gas/liquid) will diffuse through the gasket, a second kind of alarm might be generated, based on temperature changes.

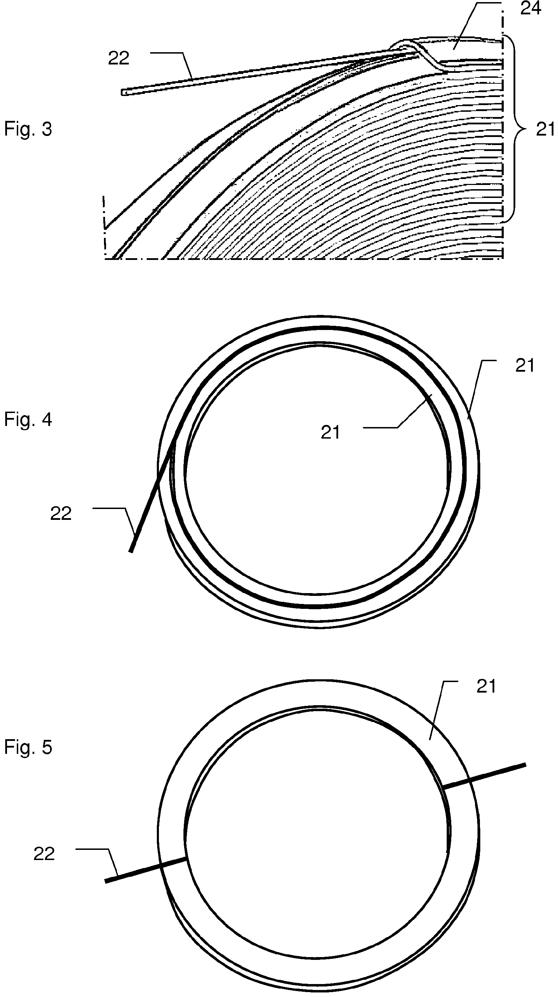

Figure 2 shows a detail of the outer ring 23, comprising a hole 23A to guide and give access to the optical fiber 22 to the compressible portion 21 from exterior, and figure 3 shows the optical fiber 22 output from the compressible portion 21, made of the V shape metallic strip, wound with a soft filler, graphite.

In detail, the optical fiber 22 is added to the spiral wound gasket during production of the spiral. Before the last winding with graphite will be produced; the optical fiber 22 will be added and wound with the filler 25 and metal spiral 24. When adding the optical fiber 22, it will be placed in the V-shape of the metal band 24. The optical fiber 22 will be added 'above' the filler 25. The filler 25 will be cut off after minimum one circular winding. The optical fiber 22 will be wound together with the metal windings till the outer diameter has been reached. In this part of the gasket, the optical fiber may be protected with a tube, in particular a plastic tube, and preferably a tube made of polytetrafluoroethylene (PTFE). There might have three minimum 'extra' windings of the metallic band 24. It can also be limited to a much shorter section (1/4 of a winding or even less). The sensing portion of optical fiber 22 has to be placed in the part with the filler 25.

The fiber will be guided to the 'outside' of the flange. In this aim, an outer ring 23 (or guide ring) is used for the spiral wound gasket, the optical fiber 22 is guided to the outside of the guide ring 23 by a groove in the ring or a hole 23A will be drilled in the guide ring 23.

Figure 4 and 5 represent alternative constructions of gaskets (not claimed), using homogeneous materials for the compressible portion 21. As a result, and as shown figure 4, the optical fiber 22 is guided out of the compressible portion 21 in a tangential direction, but as shown figure 5, radial direction guiding is also an alternative.

Figure 2 shows a hole 23A, but it is also possible to implement a groove in the outer ring 23 to guide the optical fiber 22.

Figures 6A represents a first possible design for the tube assembly, where tubes 11 and 12 have same flange design, and gasket G comprises an outer ring and an inner ring, the compressible portion of the gasket G being in contact with the tubes 11 and 12.

Figure 6B represents a second possible design for the tube assembly, where tubes 11 and 12 have different flange design, and gasket G comprises only a compressible portion, with no outer or inner ring. In such case, one of the tube flange might be adapted to allow a passage for the optical fiber 22, with an opening such as a groove or a hole.

Figure 6C represents a third possible design for the tube assembly, where tubes 11 and 12 have different flange design, and gasket G comprises only a compressible portion, and an inner ring. In such case, one of the tube flange might also be adapted to allow a passage for the optical fiber 22, with an opening such as a groove or a hole.

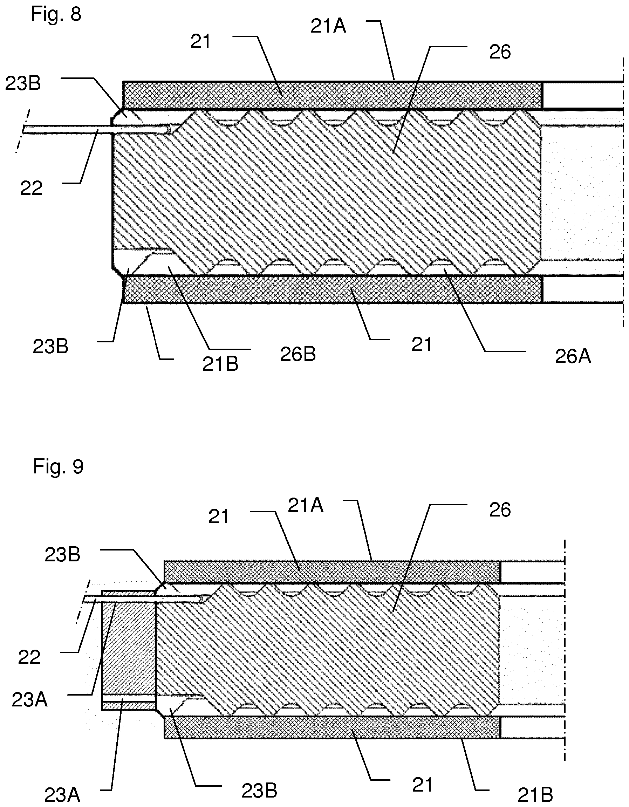

Figure 8 represents another alternative gasket (not claimed), comprising a serrated core 26 sandwiched between two washers of compressible portions 21. As an example, the core 26 might be metallic (stainless steel), and the compressible portions 21 might be of graphite or polytetrafluoroethylene (PTFE), or mica, or rubber. The core 26 presents a serrated or corrugated or wavy interface with the compressible portions 21, the wavy interface being provided by successive grooves 26A, 26B. Alternatively, the wavy interface might be provided by a spiral groove.

Sealing between the tubes is provided by deformation of the compressible portions 21, which can penetrate the grooves 26A, 26B, when the tubes are clamped together.

An optical fiber 22 is provided in the groove 26B forming a receiving recess, so that the top compressible portion 21 will apply a residual pressure onto the optical fiber, which can be detected as explained above for figure 7. It might be noticed that the groove 26B (or the part of the spiral groove receiving the optical fibre) might be deeper than the rest of grooves 26A forming sealing recesses, to avoid overstress of the optical fiber 22. In particular, groove 26B might present a depth equal to or smaller than the depth of groove 26A added to the size (diameter) of the optical fiber 22.

Finally, grooves 23B are provided on core 26 to allow guiding of the optical fiber 22 out of the gasket, towards a space between opposite faces 21A, 21B, so that the tube flanges do not need to be modified for optical fiber 22 presence. It should be noticed that two grooves 23B are provided on each side of core 26, so that the gasket can be equipped with two optical fibers 22 if necessary.

Figure 9 shows an alternative gasket of figure 8 (not claimed), comprising a core 26 sandwiched between two washers of compressible portions 21, and equipped with an outer ring 23. Compared to the gasket of figure 8, only the optional outer ring 23 will be described in detail.

The outer ring 23 might be metallic (stainless steel for example), and comprises two holes 23A to provide guiding of the optical fiber 22. The holes 23A are aligned with the grooves 23B of the core 26 to provide adequate guiding of the optical fiber 22. The outer ring 23 might be attached to the core 26 as shown on figure 9 (internal diameter of outer ring 23 fits to outer diameter of core 26), but the outer ring 23 might be installed into a peripheral groove of the core 26.

It is of course understood that obvious improvements and/or modifications for one skilled in the art may be implemented, still being under the scope of the invention as defined by the claims.

The opposite faces 21a and 21B might be flat or corrugated, and a typical design is to coat the opposite surfaces 21A, 21B with polytetrafluoroethylene, graphite or MICA for example.

## Claims

1. Gasket (G) for sealing an assembly of two tubes (11, 12) each comprising an extremity with a seating surface,
the gasket (G) comprising a sealing portion with two opposite faces (21A, 21B), each being arranged to contact a respective seating surface,
the sealing portion comprising at least a compressible portion (21),
wherein the gasket (G) comprises an optical fiber (22) comprising a sensing portion at least partially enclosed in the compressible portion (21) and arranged to detect a compression force applied by the tube assembly to the compressible portion (21) via the opposite faces (21A, 21B), wherein the compressible portion (21) comprises a strip spirally wound,
**characterized in**
**that** the gasket comprises guiding means arranged to provide guiding of the optical fiber (22) out of the sealing portion,
wherein the sensing portion is at least partially wound with the strip.

2. Gasket (G) according to the preceding claim, wherein the guiding means are arranged to provide guiding of the optical fiber (22) towards a space arranged between two planes defined by the two opposite faces (21A, 21B).

3. Gasket (G) according to claim 1 or 2, wherein a cross section of the strip comprises a portion in V shape or U-shape.

4. Gasket (G) according to the preceding claim, wherein the sensing portion of the optical fiber (22) is located in a central part of the V shape.

5. Gasket (G) according to any one of the claims 1 to 4, wherein the strip comprises a metallic layer and an filler layer, the filler layer comprising a material such as graphite, polytetrafluoroethylene, or mica, or rubber.

6. Gasket (G) according to the preceding claim, wherein the sensing portion of the optical fiber (22) is at least partially located within the filler layer.

7. Gasket (G) according to any one of the preceding claims, wherein the compressible portion (21) comprises a solid portion, made of an homogenous material at least partially enclosing the sensing portion of the optical fiber (22).

8. Gasket (G) according to any one of the preceding claims, wherein the compressible portion (21) comprises a composite portion comprising at least one fibrous material and at least partially enclosing the sensing portion of the optical fiber (22).

9. Gasket (G) according to any one of the preceding claims, wherein the sensing portion of the optical fiber (22) comprises a Fiber Bragg grating sensor.

10. Tube assembly, comprising:
- at least two tubes (11, 12) each comprising an extremity with a seating surface, or one tube and one plate,
- a gasket (G) according to any one of the preceding claims, arranged between the seating surfaces,
- clamping means, such as bolts, generating a clamping force maintaining the two tubes (11, 12) assembled, and the compression force applied onto the compressible portion (21).

11. Monitoring system, comprising:
- a tube assembly according to the preceding claim,
- a monitoring unit (M), connected to the optical fiber (22) of the gasket (G), for monitoring the compression force applied by the tube assembly to the compressible portion (21).

## Patentansprüche

1. Dichtung (G) zum Abdichten einer Anordnung von zwei Rohren (11, 12), von denen jedes einen Endpunkt mit einer Sitzfläche umfasst,
wobei die Dichtung (G) einen Dichtungsabschnitt mit zwei gegenüberliegenden Seiten (21A, 21B) umfasst, von denen jede angeordnet ist, eine jeweilige Sitzfläche zu berühren,
wobei der Dichtungsabschnitt mindestens einen komprimierbaren Abschnitt (21) umfasst,
wobei die Dichtung (G) eine optische Faser (22) umfasst, die einen Erfassungsabschnitt umfasst, der komprimierbare Abschnitt (21) mindestens teilweise umschlossenen und angeordnet ist, eine Komprimierungskraft zu detektieren, die von der Rohranordnung via die gegenüberliegenden Flächen (21A, 21B) auf den komprimierbaren Abschnitt (21) ausgeübt wird, wobei der komprimierbare Abschnitt (21) einen spiralförmig gewickelten Streifen umfasst,
**dadurch gekennzeichnet, dass** die Dichtung Führungsmittel umfasst, die angeordnet sind, eine Führung der optischen Faser (22) aus dem Dichtungsabschnitt heraus bereitzustellen, wobei der Erfassungsabschnitt mindestens teilweise mit dem Streifen gewickelt ist.

2. Dichtung (G) nach dem vorhergehenden Anspruch, wobei die Führungsmittel angeordnet sind, eine Führung der optischen Faser (22) zu einem Raum bereitzustellen, der zwischen zwei Ebenen angeordnet ist, die durch die zwei gegenüberliegenden Seiten (21A, 21B) definiert sind.

3. Dichtung (G) nach Anspruch 1 oder 2, wobei ein Querschnitt des Streifens einen Abschnitt in V-Form oder in U-Form umfasst.

4. Dichtung (G) nach dem vorhergehenden Anspruch, wobei sich der Erfassungsabschnitt der optischen Faser (22) in einem zentralen Teil der V-Form befindet.

5. Dichtung (G) nach einem der Ansprüche 1 bis 4, wobei der Streifen eine Metallschicht und eine Füllschicht umfasst, wobei die Füllschicht ein Material umfasst, wie etwa Graphit, Polytetrafluorethylen oder Glimmer oder Gummi.

6. Dichtung (G) nach dem vorhergehenden Anspruch, wobei sich der Erfassungsabschnitt der optischen Faser (22) mindestens teilweise in der Füllschicht befindet.

7. Dichtung (G) nach einem der vorhergehenden Ansprüche, wobei der komprimierbare Abschnitt (21) einen festen Abschnitt umfasst, der aus einem homogenen Material besteht, das den Erfassungsabschnitt der optischen Faser (22) mindestens teilweise umschließt.

8. Dichtung (G) nach einem der vorhergehenden Ansprüche, wobei der komprimierbare Abschnitt (21) einen Verbundabschnitt umfasst, der mindestens ein Fasermaterial umfasst und den Erfassungsabschnitt der optischen Faser (22) mindestens teilweise umschließt.

9. Dichtung (G) nach einem der vorhergehenden Ansprüche, wobei der Erfassungsabschnitt der optischen Faser (22) einen Bragg-Fasergittersensor umfasst.

10. Rohranordnung, die Folgendes umfasst:
- mindestens zwei Rohren (11, 12), von denen jedes einen Endpunkt mit einer Sitzfläche umfasst, oder ein Rohr und eine Platte,
- eine Dichtung (G) nach einem der vorhergehenden Ansprüche, die zwischen den Sitzflächen angeordnet ist,
- Klemmmittel, wie etwa Bolzen, die eine Klemmkraft erzeugen, die die zwei Rohre (11, 12) montiert und die Komprimierungskraft auf den komprimierbaren Abschnitt (21) ausgeübt halten.

11. Überwachungssystem, das Folgendes umfasst:
- eine Rohranordnung nach dem vorhergehenden Anspruch,
- eine Überwachungseinheit (M), die mit der optischen Faser (22) der Dichtung (G) verbunden ist, zum Überwachen der von der Rohranordnung auf den komprimierbaren Abschnitt (21) ausgeübten Komprimierungskraft.

## Revendications

1. Joint d'étanchéité (G) pour sceller un ensemble de deux tubes (11, 12) comprenant chacun une extrémité avec une surface d'installation,
le joint d'étanchéité (G) comprenant une partie d'étanchéité avec deux faces (21A, 21B) opposées, chacune étant agencée pour être en contact avec une surface d'installation respective,
la partie d'étanchéité comprenant au moins une partie compressible (21),
dans lequel le joint d'étanchéité (G) comprend une fibre optique (22) comprenant une partie de détection au moins partiellement enfermée dans la partie compressible (21) et agencée pour détecter une force de compression appliquée par l'ensemble de tubes sur la partie compressible (21) via les faces (21A, 21B) opposées, dans lequel la partie compressible (21) comprend une bande enroulée en spirale,
**caractérisé en ce que** le joint d'étanchéité comprend des moyens de guidage agencés pour fournir le guidage de la fibre optique (22) à l'extérieur de la partie d'étanchéité,
dans lequel la partie de détection est au moins partiellement enroulée avec la bande.

2. Joint d'étanchéité (G) selon la revendication précédente, dans lequel les moyens de guidage sont agencés pour fournir le guidage de la fibre optique (22) vers un espace agencé entre deux plans définis par les deux faces (21A, 21B) opposées.

3. Joint d'étanchéité (G) selon la revendication 1 ou 2, dans lequel une section transversale de la bande comprend une partie en forme de V ou en forme de U.

4. Joint d'étanchéité (G) selon la revendication précédente, dans lequel la partie de détection de la fibre optique (22) est positionnée dans une partie centrale de la forme de V.

5. Joint d'étanchéité (G) selon l'une quelconque des revendications 1 à 4, dans lequel la bande comprend une couche métallique et une couche de remplissage, la couche de remplissage comprenant un matériau tel que le graphite, le polytétrafluoroéthylène ou le mica, ou le caoutchouc.

6. Joint d'étanchéité (G) selon la revendication précédente, dans lequel la partie de détection de la fibre optique (22) est au moins partiellement positionnée à l'intérieur de la couche de remplissage.

7. Joint d'étanchéité (G) selon l'une quelconque des revendications précédentes, dans lequel la partie compressible (21) comprend une partie solide, réalisée avec un matériau homogène enfermant au moins partiellement la partie de détection de la fibre optique (22).

8. Joint d'étanchéité (G) selon l'une quelconque des revendications précédentes, dans lequel la partie compressible (21) comprend une partie composite comprenant au moins un matériau fibreux et enfermant au moins partiellement la partie de détection de la fibre optique (22).

9. Joint d'étanchéité (G) selon l'une quelconque des revendications précédentes, dans lequel la partie de détection de la fibre optique (22) comprend un capteur à réseau de Bragg sur fibre.

10. Ensemble de tubes comprenant :
au moins deux tubes (11, 12) comprenant chacun une extrémité avec une surface **d'installation,** ou un tube et une plaque,
un joint d'étanchéité (G) selon l'une quelconque des revendications précédentes, agencé entre les surfaces d'installation,
des moyens de serrage, tels que des boulons, générant une force de serrage maintenant les deux tubes (11, 12) assemblés, et la force de compression appliquée sur la partie compressible (21).

11. Système de surveillance comprenant :
un ensemble de tubes selon la revendication précédente,
une unité de surveillance (M) raccordée à la fibre optique (22) du joint d'étanchéité (G), pour surveiller la force de compression appliquée par l'ensemble de tubes sur la partie compressible (21).
